# EUROPEAN PATENT SPECIFICATION

(11) **EP 2 153 914 B1**
(45) Date of publication and mention of the grant of the patent: **15.06.2011**
(21) Application number: 09382140.3
(22) Date of filing: 07.08.2009
(51) Int. Cl.: B08B 1/04, B08B 3/02

(54) **Method for cleaning parabolic section mirrors of a thermosolar plant and apparatus for carrying out said method**
Verfahren zur Reinigung von parabolischen Abschnittsspiegeln einer Thermosolaranlage und Vorrichtung zur Durchführung des Verfahrens
Procédé pour le nettoyage de miroirs à section parabolique d'une centrale thermosolaire et appareil pour la réalisation dudit procédé

(30) Priority: 08.08.2008 ES 200802426
(43) Date of publication of application: 17.02.2010
(73) Proprietor: Logistica Y Acondicionamientos Industriales, S.A.U., 46015 Valencia (ES)
(72) Inventor: Lacalle Bayo, Jesús, 46015 VALENCIA (ES)
(74) Representative: Sanz-Bermell Martinez, Alejandro

(56) References cited:
- DE-A1-102004 036 094
- DE-U1-202007 001 488
- US-A- 3 934 573
- US-A- 4 202 322
- US-A1- 2008 163 864

## Description

### Technical Sector

The technical sector involved in this invention is that of cleaning objects with large longitudinal surfaces, and in particular cleaning mirrors, such as the parabolic mirrors of an installation for picking up solar energy, usually a thermo-solar installation. This type of installation consists of a set of rows of longitudinal mirrors with a parabolic section which may be several hundred metres long, each row being formed of a plurality of modules and each mirror being around 2 to 10m in height.

This invention refers to a method for automatic cleaning of parabolic section mirrors, which will herein be called parabolic mirrors, of thermo-solar power plants, by means of which the sun's rays are reflected by these mirrors and concentrated in a longitudinal tube for receiving radiation, which contains a fluid for transporting the heat obtained.

The collecting tube is held by means of supports (securing bars) normally set out at regular interval, from the central part of said mirrors. Furthermore, between each module or set of several modules there are securing pillars (civil engineering) which project over a significant portion of said mirrors.

Since the installations of this type are in the open air, they are prone to receiving dust and other dirt which reduces the performance of the installation. It is therefore necessary to clean the reflective surfaces regularly in order to keep the performance of the installation within satisfactory parameters.

### Background

Until now, the parabolic mirrors of installations of the type described were cleaned manually, using water-sprayers and manual brushes. The disadvantage involved in cleaning them in this way is a very low yield and high cost, apart from its quality depending on the skill of each operator performing the task. The water consumption is also very high.

Semi-manual cleaning operations have also been used, in which a pulling slide supports a straight scraping brush and also provides pressurised water, also wasting cleaning water. The supports and pillars of the mirrors also make it impossible to perform an invariably linear cleaning, since both the supports and the pillars can cause significant damage to the brushes and their anchorages.

It is thus necessary for the cleaning method to allow the retraction of the cleaning means when these obstacles come up along the travel.

### Prior art

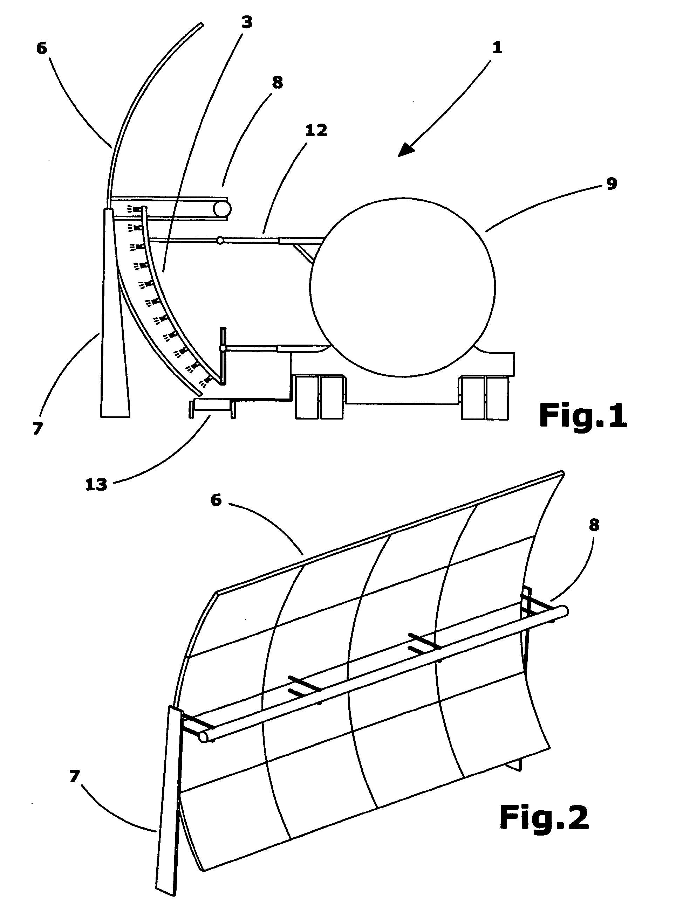

DE 10 2004 036094 A1 discloses an apparatus for cleaning a parabolic collector mirror. It consists on a vehicle having water projection and collection means; according to an embodiment it also contains rotatory brushes. In figure 1 the brushes are straight linear and there is not other definition of said brushes along the document.

US 3 934 573 A discloses a spherical system for the concentration and extraction of solar energy which includes an apparatus for cleaning an spherical boiler having carrels for rotation of the external cleaning system, and nozzles for ejecting cleaning water and drying air.

US 4 202 322 A discloses a solar energy collector and heat exchanger with a number of parabolic section reflectors having a series of jets for spraying the mirror surfaces with a cleaning solution.

### Short explanation of the invention

A method for cleaning parabolic mirrors of a thermo-solar power installation is proposed, including spraying water and brushing the surface of the mirrors with a rotating brush which adopts the shape of the mirror concave parabola, and means for retracting or moving the devices spraying the water and /or brushers when meeting obstacles, also including drying the mirrors, as well as a device fitted with means for carrying out these operations.

### Short description of the drawings

In order to illustrate the following explanation, five sheets of drawings are adjoined to this descriptive report, including eight figures representing an embodiment of the invention as an example, in which:
- Figure 1: illustrates an example of a cleaning apparatus according to the invention, in a rear view in the working direction, with no brushing device;
- Figure 2: shows a typical parabolic mirror in a perspective view;

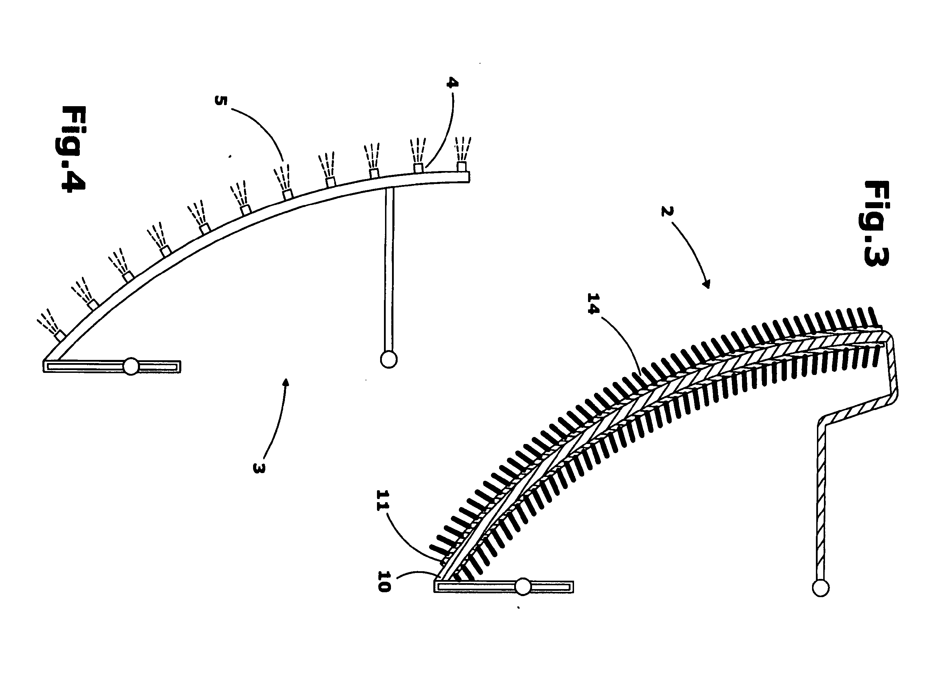

- Figure 3: shows a section of a brushing device according to the invention;
- Figure 4: shows a water spraying device according to a lateral view, in which water is shown being sprayed;

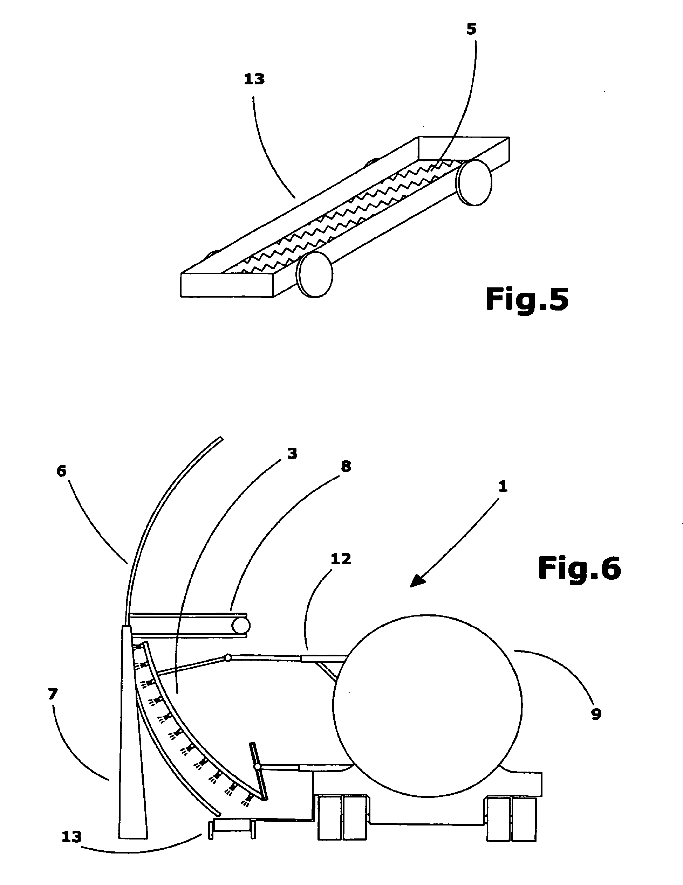

- Figure 5: shows a tray for collecting the residual water from cleaning the mirror;
- Figure 6: shows the cleaning apparatus of Figure 1, in which the position of the water spray devices has been modified to avoid one of the tube supports;

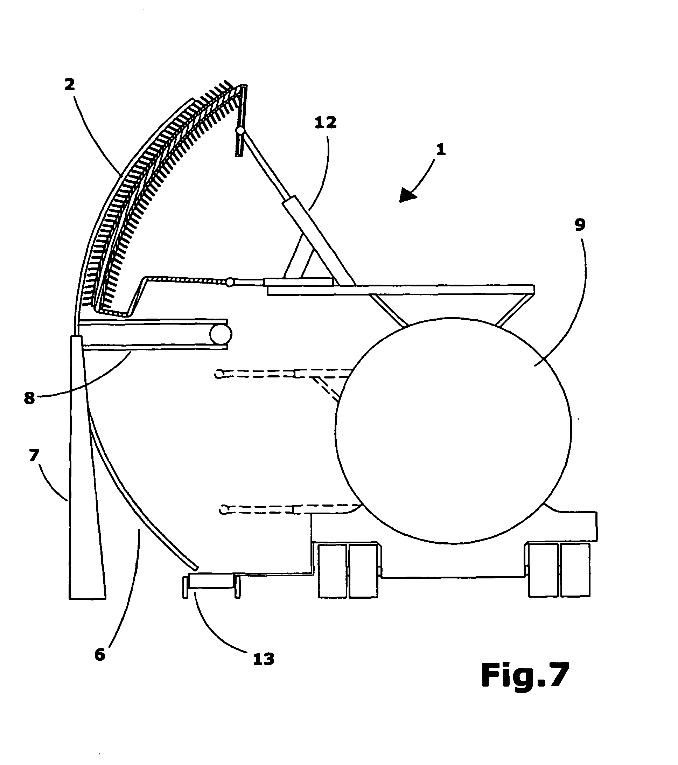

- Figure 7: shows the cleaning device from the rear, represented with no water spraying device, equipped for cleaning the top of the mirror.

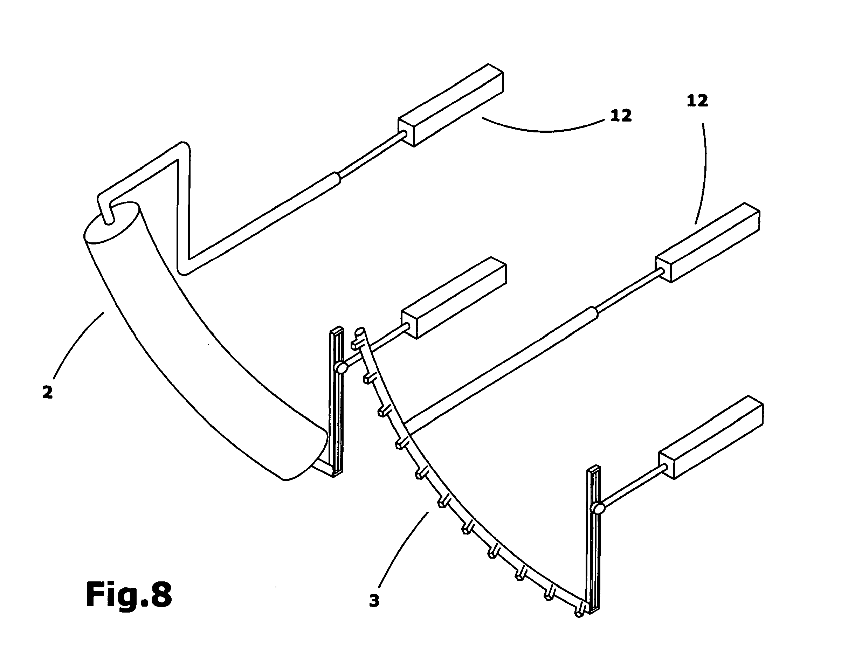

- Figure 8: shows a schematic perspective view of a water spraying device and a brushing device in the operating position.

In the following explanation the following references will be used with regard to the items represented in the adjoined drawings:
1. Cleaning apparatus or vehicle
2. Brushing device
3. Water spray device
4. Nozzle
5. Cleaning water
6. Mirror
7. Mirror support
8. Tube support
9. Water storage tank
10. Brush core
11. Brush covering or casing
12. Lifting cylinder
13. Collection tray
14. Bristles

### Detailed description of the invention

This thus describes a method for cleaning mirrors with a concave parabolic section of a solar collector plant, such as solar thermal collectors, as well as an apparatus enabling the execution of the method described.

Since the mirrors have means for positioning these according to the position of the sun, these arc also applicable for the cleaning process. The cleaning process is carried out when the mirrors (the cord which links the ends of their section) are vertically aligned.

The method for cleaning mirrors of this invention essentially includes the following operations:
1) Movement along each row of mirrors of an apparatus carrying the cleaning devices jointly or separately fitted with a clean water tank, with the following events taking place during this movement:
   a) Spraying pressurised water; water under pressure is sprayed out by each nozzle preferably at the same distance (at a regular distance) for example by means of a conduit carrying the nozzles which adapts to the profile of the mirror.
   b) Brushing the surface of the mirrors
      i) The brushing is done by means of a rotary brush;
      ii) The brush adopts the shape of the mirror parabola;
      iii) Possible detection of the obstacles (supports of the collection tube and of the pillars for securing the mirrors);
      iv) Retraction or angular displacement of the brushing system when coming across each obstacle encountered;
   c) Collection of residual water;
   d) Possible later treatment of water for its reuse.

This method can be used either only for one part of the mirror (upper, lower, in respect of its central axis) or for the whole mirror. The mirror cleaning can be done not only in one, but in two or more stages. For example, first the top part and then the lower part if there are components of the mirror preventing cleaning in one phase. If the cleaning is done only at the bottom, in a second phase the position of the mirror is inverted, that is, it is turned an angle close to 180° with the formerly upper part thus being at the bottom and with the opposite direction being faced.

There are of course some parts of the mirrors which have obstacles for cleaning. Two specific obstacles could be the supports for the tube which contain the heated thermal fluid, and the supports of the mirrors, and their rotation axes, which also normally stand out from the surface of the mirrors. To avoid these obstacles, a displacement has additionally been designed, either of retraction when encountering the pillars which occupy a significant part of the curve forming the section of the mirror, or a slight transitory rotation of the brushing support, so that when each of the supports is reached the brush is moved downwards (or upwards if the upper part is being cleaned) to return to its position after passing said obstacle. This operation can be done manually or automatically.

Optionally, there may be an additional stage for drying the mirrors by means of compressed air after the spraying procedure.

To ensure the minimum consumption of water this can possibly be collected for onsite or later treatment.

For the execution of the previously described method, a cleaning apparatus 1 is designed, which has at least the following components to carry out the essential stages of the method:
- A vehicle or apparatus for moving the set of items;
- At least one support for a structure spraying pressurised water, including this support:
   o At least one tube with a profile similar to that of the mirror to be cleaned, and
   o A set of diffusion nozzles which spray the water against the surface of the mirror;
   o Possible means of retracting the structure;
   o Possible means of dismantling the structure;
- At least one support for a brushing device;
   o The brushing device in turn includes;
      ■ A core with a profile similar to that of the mirror to be cleaned;
      ■ A flexible covering fitted with bristles, which takes the form of said core;
      ■ Possible means for retraction of the device; and
      ■ Possible means of dismantling the device;
- A device for collecting the water used in cleaning;
- A tank with clean water;
- A tank with used water;
- Possibly means of treating the utilised water in order for this to be reused.
- Possibly means of guiding the vehicle at the proper distance from the mirrors;
- Means of adjusting the distance of the structure for driving the pressurised water against the mirror; and
- Means of adjusting the distance between the brushing device and the mirror.

The device for spraying water 3 includes nozzles 4 and uses water 5 under high pressure for cleaning the mirror 6. The water can be sprayed before the brushing process, which facilitates getting the dirt off the surface of the mirror 6; after brushing, which facilitates getting the residual dirt off, or before and after, combining the two effects described. It is intended for this water spraying device 3 to have a curved shape similar to the profile of the mirror 6, which enables the distance from the nozzles to the mirror to be approximately the same.

The brushing device 2 is preferentially rotary, which enables eliminating virtually all the dirt attached to the mirror 6. In a preferential embodiment the brushing device consists of an elongated core 10 with a circular section, whose generatrix essentially adopts the shape of the mirror 6. The brushing device 2 has a casing or covering 11 which is able to turn around the core 10 and which has a plurality of bristles 14. For collecting the water 5 which is used for cleaning the mirror 6 and its treatment and reuse there is also a collection tray 13 in the cleaning apparatus 1. Due to the shape and position of the mirror in the cleaning stage the water will tend to fall by gravity, being able to be easily collected by said collection tray 13. When the water 5 falls into this tray 13 it carries the dirt picked up from the mirror 6 and consequently to be reused it first needs to be filtered or cleaned before reuse. This filtration or cleaning can be done directly in the cleaning apparatus 1 itself or in a processing plant separate from said apparatus. If the treatment takes place in the cleaning apparatus 1 this apparatus will include the filtration system and otherwise it will include a tank for collection of the used water.

The supply of cleaning water 5 can take place from the corresponding storage tank 9 set in the cleaning apparatus 1 or from a water conduit installed in the place to be cleaned.

There is optionally a drying device which uses compressed air to dry the mirror 6 and which preferably has the same shape as the mirror 6.

As has previously been stated, when the cleaning apparatus 1 encounters obstacles such as the supports of the collection tube 8 or the sustaining pillars or supports of the mirrors 7, it becomes necessary to change the position of the cleaning devices used, specifically the brushing device 2 and - depending on the distance at which they work from- , the water spraying device 3 and possibly the drying device. This is done by means of a device for angular displacement or retraction. In a preferential embodiment, this system of retraction or angular displacement is by means of pneumatic or hydraulic cylinders 12, or by means of electric motors, which can be applied to one or more of the aforementioned devices. In the embodiment represented, the devices are connected in two cylinders 12, which are fitted on the cleaning apparatus 1; the connection of one of the cylinders is done by an articulation with its axis parallel to the tube containing the fluid for transport of the thermal fluid, and the connection of the other cylinder with an articulation, but on a freely moving guide. The position is determined by the distance between one articulation and another, which means that when this position is set by the action of the cylinders 12 there is no degree of freedom for the other items. Hence the position of the devices can be regulated by means of said cylinders 12, easily avoiding any obstacles encountered.

The detection of obstacles can be automatic, by means of the corresponding detector.

If the cleaning has to be done in a single run, two cleaning apparatuses will be required, one for the bottom and one for the top of the mirror 6. This can be done separately (first above and then below to prevent dirt falling on the clean part - bottom- from the part being cleaned -top-) or by means of a combined device. It is also possible for the cleaning to be done only at the bottom, by inverting the position of the mirror to repeat the operation on the other part of the mirror, formerly at the top and then moved to the bottom. This requires rotating the mirror through nearly 180° in respect of its axis of rotation, supported by the securing pillars.

## Claims

1. A method for cleaning concave parabolic-section mirrors at a thermo-solar power plant arranged in one or more rows, said mirrors incorporating supports for sustaining a tube for collecting the radiation projected by the mirrors, for use in those in which longitudinal parabolic section mirrors are set up, comprising at least the following operations:
a) Movement along each row of mirrors of an apparatus carrying the cleaning means, provided with an incorporated or separate clean water tank, with the following events taking place during the movement:
• Spraying pressurised water;
• Brushing the surface of the mirrors;
The surface of the mirrors is brushed by means of a rotating brush **characterised in that** the brushing by means of the rotating brush adapts to the concave surface of the mirrors that are being cleaned.

2. A method for cleaning parabolic-section mirrors at a thermo-solar power plant, according to claim 1, **characterised by** also comprising collection of the residual water used in the cleaning process.

3. A method for cleaning parabolic-section mirrors at a thermo-solar power plant, according to claim 2, **characterised by** also comprising treatment of the residual water from cleaning the mirrors for this to be reused.

4. A method for cleaning parabolic-section mirrors at a thermo-solar power plant according to claim 3, **characterised in that** the water treatment is done in the same apparatus for cleaning the mirrors.

5. A method for cleaning parabolic-section mirrors at a thermo-solar power plant, according to any of the above claims, **characterised in that** the water is sprayed by means of nozzles set at a regular distance from the spraying surface.

6. A method for cleaning parabolic-section mirrors at a thermo-solar power plant, according to claim 6, **characterised by** also including the retraction of the means for spraying water when obstacles on the mirrors are encountered.

7. A method for cleaning parabolic-section mirrors at a thermo-solar power plant, according to any of the above claims, **characterised by** also including the retraction of the brushing system when obstacles on the mirrors are encountered.

8. A method for cleaning parabolic-section mirrors at a thermo-solar power plant, according to any of the above claims, **characterised by** also including avoiding obstacles by displacement along the curve formed by the mirror section.

9. A method for cleaning parabolic-section mirrors at a thermo-solar power plant, according to claim 3, **characterised by** also including the operation for drying the mirrors after spraying the water and brushing these.

10. A method for cleaning parabolic-section mirrors at a thermo-solar power plant, according to any of the above claims, **characterised by** also including a device for detecting the position of any obstacles existing on the mirrors.

11. A cleaning apparatus (1) for carrying out the method of claims 1 to 11, comprising:
• At least one brushing device (2); and
• At least one water-spraying device (3) with spray nozzles (5) which takes water from a clean water tank (9) incorporated in this apparatus or from an external outlet;
**characterised in that** the brushing device (2) adapts to the concave profile of the mirror surface (6) to be cleaned, said brushing device being rotary;
the brushing device incorporates:
• A rigid core (10) with a profile similar to that of the mirror to be cleaned; and
• A flexible casing (11), filted with bristles (14), which adopts the shape of said core.

12. Cleaning apparatus, according to claim 11, **characterised by** also including a tray and a collection tray (13) for the used residual water.

13. Cleaning apparatus, according to claim 12, **characterised by** also including a device for treating the water collected for this to be reused.

14. A cleaning apparatus, according to any of claims 12 and 13, **characterised by** also comprising a tank for collecting residual water.

15. A cleaning apparatus, according to any of claims 11 to 14, **characterised by** also comprising a device for projecting drying air onto the mirrors.

16. A cleaning apparatus, according to any of claims 11 to 15, **characterised by** also comprising a device for detecting obstacles existing on the mirrors.

17. A cleaning apparatus, according to any of claims 11 to 16, **characterised in that** the brushing device is arranged on a structure supported by at least one pneumatic or hydraulic cylinder or electrical retraction device.

18. A cleaning apparatus, according to claim 17, **characterised in that** the brushing device is held on two pneumatic or hydraulic cylinders or electrical retraction devices, one of these being articulated in a zone close to one of the ends, and the other articulated on a slide, determining the position through the degree of action of said pneumatic or hydraulic cylinders, or by the means of electrical retraction.

19. A cleaning apparatus, according to any of claims 11 to 18, **characterised in that** the device for spraying water fitted with spray nozzles takes on a form similar to the curve of the mirror section.

20. A cleaning apparatus, according to any of claims 11 to 19, **characterised** because this includes means for guiding it along the row of mirrors.

## Patentansprüche

1. Ein Verfahren zur Reinigung von Spiegel mit konkavem, parabelförmigem Querschnitt an einem Thermosolarkraftwerk, angeordnet in einer oder mehreren Reihe(n). Genannte Spiegel haben integrierte Stützen zum Tragen einer Röhre für das Einsammeln der Strahlung, die durch die Spiegel reflektiert wird. Bestimmt für den Gebrauch in Installationen, worin längsverlaufende Spiegel mit parabelförmigem Querschnitt aufgestellt sind, umfasst werden zumindest die folgenden Verrichtungen:
a) Bewegung, entlang jeder Spiegelreihe, eines Gerätes, das die Reinigungsmittel trägt, versehen mit einem integrierten oder separaten Reinigungswassertank. Die folgenden Ereignisse finden statt während der Bewegung:
■ Sprühen von Drukwasser;
■ Bürsten der Fläche der Spiegel;
Die Oberfläche der Spiegel wird gebürstet mithilfe einer rotierenden Bürste, **dadurch gekennzeichnet, dass** der Bürstenvorgang mithilfe der rotierenden Bürste sich der konkaven Fläche der Spiegel, die gereinigt werden, anpasst.

2. Ein Verfahren zur Reinigung von Spiegel mit parabelförmigem Querschnitt in einem Thermosolarkraftwerk, gemäß Anspruch Nr. 1, **dadurch gekennzeichnet, dass** das im Reinigungsprozeß benutzte Restwasser auch gesammelt wird.

3. Ein Verfahren zur Reinigung von Spiegel mit parabelförmigem Querschnitt in einem Thermosolarkraftwerk, gemäß Anspruch Nr. 2, **dadurch gekennzeichnet, dass** das Restwasser, das aus dem Reinigungsprozess der Spiegel entsteht, auch wiederverwendet wird.

4. Ein Verfahren zur Reinigung von Spiegel mit parabelförmigem Querschnitt in einem Thermosolarkraftwerk gemäß Anspruch Nr. 3, **dadurch gekennzeichnet, dass** die Wasseraufbereitung in dem gleichen Gerät, das zur Spiegelreinigung benutzt wird, ausgeführt wird.

5. Ein Verfahren zur Reinigung von Spiegel mit parabelförmigem Querschnitt in einem Thermosolarkraftwerk, gemäß jedem der obengenannten Ansprüche, **dadurch gekennzeichnet, dass** das Wasser mit Düsen gesprüht wird, die in einem regelmäßigen Abstand zur Sprühfläche angeordnet sind.

6. Ein Verfahren zur Reinigung von Spiegel mit parabelförmigem Querschnitt in einem Thermosolarkraftwerk, gemäß Anspruch Nr. 6, **dadurch gekennzeichnet, dass** sich die Vorrichtung zum Sprühen von Wasser auch zurückzieht wenn Hindernisse auf der Fläche des Spiegels angetroffen werden.

7. Ein Verfahren zur Reinigung von Spiegel mit parabelförmigem Querschnitt in einem Thermosolarkraftwerk, gemäß jedem der obengenannten Ansprüche, **dadurch gekennzeichnet, dass** auch der Rückzug des Bürstensystems stattfindet wenn Hindernisse auf der Fläche des Spiegels angetroffen werden..

8. Ein Verfahren zur Reinigung von Spiegel mit parabelförmigem Querschnitt in einem Thermosolarkraftwerk, gemäß jedem der obengenannten Ansprüche, **dadurch gekennzeichnet, dass** angetroffende Hindernisse auch durch Verlagerung entlang der vom Spiegelquerschnitt beschriebenen Kurve vermeidet werden.

9. Ein Verfahren zur Reinigung von Spiegel mit parabelförmigem Querschnitt in einem Thermosolarkraftwerk, gemäß Anspruch Nr. 3, **dadurch gekennzeichnet, dass** auch eine Vorrichtung für das Trocknen der Spiegel nach dem Sprühen des Wassers und dem Bürsten der Spiegel mit einbegriffen ist.

10. Ein Verfahren zur Reinigung von Spiegel mit parabelförmigem Querschnitt in einem Thermosolarkraftwerk, gemäß jedem der obengenannten Ansprüche, **dadurch gekennzeichnet, dass** eine Vorrichtung zur Detektion der Position jeglicher Hindernisse, die sich auf dem Spiegel befinden, mit einbegriffen ist.

11. Ein Reinigungsapparat (1) für die Ausführung des Verfahrens gemäss den Ansprüchen 1 bis 11, bestehend aus:
■ Mindestens einer Bürstenvorrichtung (2); und
■ Mindestens einer Wassersprühvorrichtung (3) mit Sprühdüsen (5), die das Wasser von einem Reinigungswassertank (9), das in diesem Gerät ingeriert ist, oder durch einen externen Anschluß bezieht;
**dadurch gekennzeichnet, dass** die Bürstenvorrichtung (2) sich dem konkaven Profil der Spiegelfläche (6), die gereinigt werden soll, anpasst. Genannte Bürstenvorrichtung ist rotatorisch; die Bürstenvorrichtung integriert:
■ Einem starren Kern (10) mit einem Profil ähnlich dem des Spiegels, der gereinigt werden soll; und
■ Ein flexibles Gehäuse (11), versehen mit Borsten (14), das sich der Form des genannten Kerns anpasst.

12. Ein Reinigungsapparat, gemäß Anspruch Nr. 11, **dadurch gekennzeichnet, dass** auch ein Behälter und Auffangbehälter (13) für das Restwasser mit einbegriffen ist.

13. Ein Reinigungsapparat, gemäß Anspruch Nr. 12, **dadurch gekennzeichnet, dass** auch eine Vorrichtung zur Behandlung des aufgefangenes Wassers für dessen Wiederverwendung mit einbegriffen ist.

14. Ein Reinigungsapparat, gemäß jedem der Ansprüche 12 und 13, **dadurch gekennzeichnet, dass** auch einen Tank für das Auffangen von Restwasser mit einbegriffen ist.

15. Ein Reinigungsapparat, gemäß jedem der Ansprüche 11 bis 14, **dadurch gekennzeichnet, dass** auch eine Trockenluftvorrichtung, um Trockenluft auf dem Spiegel zu blasen, mit einbegriffen ist.

16. Ein Reinigungsapparat, gemäß jedem der Ansprüche 11 bis 15, **dadurch gekennzeichnet, dass** auch eine Vorrichtung für das Detektieren von sich auf dem Spiegel befindenden Hindernissen mit einbegriffen ist.

17. Ein Reinigungsapparat, gemäß jedem der Ansprüche 11 bis 16, **dadurch gekennzeichnet, dass** die Bürstenvorrichtung auf einer Konstruktion angeordnet ist, die durch mindestens einen pneumatischen oder hydraulischen Zylinder oder eine elektrische Rückzugsvorrichtung unterstütz wird.

18. Ein Reinigungsapparat, gemäß Anspruch Nr. 17, **dadurch gekennzeichnet, dass** die Bürstenvorrichtung an zwei pneumatische oder hydraulische Zylinder oder elektrische Rückzugsvorrichtungen festgehalten ist, wobei einer von diesen Zylindern oder Vorrichtungen in einer Zone gelenkig ist, die sich in der Nähe eines der Enden befindet, und der oder die andere auf einem Schlitten gelenkig ist, wobei die Position mittels des Aktionsgrades der genannten pneumatishen oder hydraulischen Zylinder bestimmt wird, oder mithilfe des elektrischen Rückzugs.

19. Ein Reinigungsapparat, gemäß jedem der Ansprüche 11 bis 18, **dadurch gekennzeichnet, dass** die mit Sprühdüsen versehenen Wassersprühvorrichtung eine Form annimmt, die der Kurve des Spiegelquerschnittes ähnlich ist.

20. Ein Reinigungsapparat, gemäß jedem der Ansprüche 11 bis 19, **dadurch gekennzeichnet, dass** es enthält Leiteinrichtung entlang der Reihe von Spiegeln.

## Revendications

1. Une méthode de nettoyage des miroirs paraboliques concaves à section dans une centrale d'énergie thermo-solaire, disposés sur une ou plusieurs rangées, sachant que les dits miroirs comportent des supports prévus pour soutenir une buse conçue pour recueillir l'irradiation projetée par les miroirs, pour son utilisation sur des miroirs paraboliques à section longitudinale installés à cette fin, qui comprendra au moins les étapes suivantes :
a) Mouvement tout au long de chaque rangée de miroirs d'un appareil portant les dispositifs de nettoyage, pourvu d'un réservoir d'eau propre intégré ou indépendant, les évènements suivants se manifestant au cours du mouvement :
■ Pulvérisation d'eau sous pression ;
■ Brossage de la surface des miroirs ;
La surface des miroirs est brossée au moyen d'une brosse rotative **caractérisée par le fait que** le brossage effectué au moyen de la brosse rotative s'adapte à la surface concave des miroirs qui sont nettoyés.

2. Une méthode de nettoyage des miroirs paraboliques à section dans une centrale d'énergie thermo-solaire, conformément à la revendication 1, **caractérisée par le fait qu'**elle permet aussi de recueillir l'eau résiduelle utilisée au cours du processus de nettoyage.

3. Une méthode de nettoyage des miroirs paraboliques à section dans une centrale d'énergie thermo-solaire, conformément à la revendication 2, **caractérisée par le fait qu'**elle permet aussi le traitement de l'eau résiduelle utilisée dans le processus de nettoyage afin que celle-ci soit réutilisée.

4. Une méthode de nettoyage des miroirs paraboliques à section dans une centrale d'énergie thermo-solaire, conformément à la revendication 3, **caractérisée par le fait que** le traitement de l'eau est effectué par le même appareil qui nettoie les miroirs.

5. Une méthode de nettoyage des miroirs paraboliques à section dans une centrale d'énergie thermo-solaire, conformément à toutes les revendications précédentes, **caractérisée par le fait que** l'eau est pulvérisée au moyen d'un diffuseur placé à une distance régulière de la surface à pulvériser.

6. Une méthode de nettoyage des miroirs paraboliques à section dans une centrale d'énergie thermo-solaire, conformément à la revendication 5, **caractérisée par le fait qu'**elle inclut aussi la rétraction des pulvérisateurs d'eau lorsque des obstacles sont détectés sur les miroirs.

7. Une méthode de nettoyage des miroirs paraboliques à section dans une centrale d'énergie thermo-solaire, conformément à toutes les revendications précédentes, **caractérisée par le fait qu'**elle inclut aussi la rétraction du système de brossage lorsque des obstacles sont détectés sur les miroirs.

8. Une méthode de nettoyage des miroirs paraboliques à section dans une centrale d'énergie thermo-solaire, conformément à toutes les revendications précédentes, **caractérisée par le fait qu'**elle inclut aussi la capacité d'éviter les obstacles en se déplaçant le long de la courbe formée par la section du miroir.

9. Une méthode de nettoyage des miroirs paraboliques à section dans une centrale d'énergie thermo-solaire, conformément à la revendication 3, **caractérisée par le fait qu'**elle inclut aussi le séchage des miroirs après que ces derniers ont été pulvérisés à l'eau et brossés.

10. Une méthode de nettoyage des miroirs paraboliques à section dans une centrale d'énergie thermo-solaire, conformément à toutes les revendications précédemment citées, **caractérisée** également par le fait qu'elle inclut un dispositif détectant la position de tout obstacle présent sur les miroirs.

11. Un appareil de nettoyage (1) pour mener à bien la méthode décrite dans les revendications 1 à 11, comprenant :
■ Au moins un système de brossage (2) et
■ Au moins un pulvérisateur d'eau (3) doté de diffuseurs (5) captant l'eau propre contenue dans des réservoirs à eau (9) intégrés dans cet appareil ou indépendants ;
**caractérisé par le fait que** le système de brossage (2) s'adapte au profil concave de la surface du miroir (6) à nettoyer, le dit système de brossage étant rotatif ;
le système de brossage comprend :
■ Un coeur rigide (10) avec un profil similaire à celui du miroir à nettoyer, et
■ Un boîtier flexible (11), équipé de brosses en soie (14), qui adopte la forme du dit coeur.

12. Appareil de nettoyage, conformément à la revendication 11, **caractérisé par le fait qu'**il intègre aussi un plateau et un plateau de recueil (13) des eaux résiduelles usées (13).

13. Appareil de nettoyage, conformément à la revendication 12, **caractérisé par le fait qu'**il inclut aussi un dispositif de traitement de l'eau recueillie afin que celle-ci soit réutilisée.

14. Un appareil de nettoyage, conformément aux revendications 12 à 13, **caractérisé par le fait qu'**il comprend aussi un réservoir de recueil des eaux résiduelles.

15. Un appareil de nettoyage, conformément aux revendications 11 à 14, **caractérisé par le fait qu'**il comprend aussi un dispositif de soufflerie permettant de projeter l'air de séchage sur les miroirs.

16. Un appareil de nettoyage, conformément aux revendications 11 à 15, **caractérisé par le fait qu'**il comprend aussi un dispositif permettant de détecter les obstacles présents sur les miroirs.

17. Un appareil de nettoyage, conformément aux revendications 11 à 16, **caractérisé par le fait que** son système de brossage est disposé sur une structure supportée par au moins un cylindre pneumatique ou hydraulique, ou encore par un dispositif de rétraction électrique.

18. Un appareil de nettoyage, conformément à la revendication 17, **caractérisé par le fait que** son système de brossage est supporté par deux cylindres pneumatiques ou hydrauliques, ou encore par un dispositif de rétraction électrique, sachant que l'un de ces derniers est articulé à proximité des extrémités, et que l'autre dispositif articulé est sur une coulisse, dont la position est déterminée par le degré de l'action exercée par les dits cylindres pneumatiques ou hydrauliques, ou par le système de rétraction électrique.

19. Un appareil de nettoyage, conformément aux revendications 11 à 18, **caractérisé par le fait que** son pulvérisateur d'eau équipé de diffuseurs adopte une forme similaire à la courbe de la section du miroir.

20. Un appareil de nettoyage, conformément aux revendications 11 à 19, **caractérisé par le fait qu'**il comprend des moyens de guidage le long de la rangée de miroirs.
